# EUROPEAN PATENT APPLICATION

(11) **EP 1 293 893 A2**
(43) Date of publication of application: **19.03.2003**
(21) Application number: 02255852.2
(22) Date of filing: 21.08.2002
(51) Int. Cl.: G06F 9/44

(54) **State-Transition-Matrix based generation of a computer program**

(30) Priority: 31.08.2001 JP 2001265001
(71) Applicant: Cats Co., Ltd, Yokohama, Kanagawa 224-0034 (JP)
(72) Inventor: Watanabe, Masahiko, c/o Cats Co., Ltd, Yokohama, Kanagawa 224-0034 (JP)
(74) Representative: Nicholls, Michael John

(57) **Abstract**

An action table that describes an action for each state is generated by extracting cells that describe the action to be executed by a system from a state transition matrix. A transition table that describes a state of the transition destination for each state is generated by extracting only cells that describe actions of transition destinations from the generated matrix. An event table that describes an event that exists in each state is generated. A program code is generated by confirming existence of an event under each state by referring to the event table when an event has occurred, and by executing an action of an event that has occurred in the current state by referring to the action table and the transition table.

## Description

### BACKGROUND OF THE INVENTION

### 1) Field of the Invention

The present invention relates to a computer program (program) for generating another program based on a state transition matrix (STM).

### 2) Description of the Related Art

A real-time control system executes a complex combination of events that are stimuli from the outside and inside of the system such as reception of various kinds of signals, and states that are behaviors of the system such as waiting for the reception of various kinds of signals. Moreover, these complex combination includes many actions. The actions are processes that the system executes corresponding to the combinations, when a specific event has occurred under a specific state. As a method of developing a program to be built into the real-time control system, there is known a program developing method that uses the STM. The state transition matrix shows a relationship between an event and a state that are disposed in a column and a row respectively or vice versa in a two-dimensional matrix. The state transition matrix includes, in a matrix form, actions corresponding to a cell at which the event and the state cross, and transition destinations transited after this action.

There are two types of state transition matrices. An event driven state transition matrix is the one in which an action is executed as event driven. A state driven state transition matrix is the one in which an action is executed as state driven. In the event driven state transition matrix, an event is awaited at one position of a program, and an action that is described in the cell of a cross point between the current state and the event that has occurred is executed. In the state driven state transition matrix, an event is monitored for each state, and when each state becomes active, an event analysis function linked with each state is started, to confirm whether an event has occurred.

For installing a program by generating it from the event driven state transition matrix, there have been conventionally known two types of installation methods, a two-dimensional table driving system and a logic driving system.

According to the installation method of the two-dimensional table driving system, a two-dimensional table consisting of events, states, and action is prepared for all cells at which an event and a state cross together. Based on this, there is generated a program of the system for executing an action by making access to the two-dimensional table from an event number of an event that has occurred and a number of the current state.

According to the installation method of the logic driving system, a table like the two-dimensional table is not used, and there is generated a program of the system for calling a processing to be executed as a logic for each state, as an action corresponding to an occurred event.

On the other hand, for installing a program by generating it from the state driven state transition matrix, it is necessary to hold information of a master and subordinate relationship of a state, an event analysis, and a state activity as a standard processing at a state transition time, for each state. Therefore, conventionally, a state information table is prepared. This table stores all kinds of information for each state (such as a master and subordinate relationship of the state, an event analysis function, and a state activity function) . Further, a state scheduler is generated that carries out a scheduling of an event monitoring of priority of each state (such as the priority of a master and subordinate relationship) that is described in the state transition matrix. A program is executed by driving the state transition matrix.

However, the method of installing a program from the state transition matrix has following problems. According to the two-dimensional table driving system for installing a program from the event driven state transition matrix, the number of actions increases following the increase in the number of events or states in the state transition matrix. As a result, the size of two-dimensional table becomes too large. Particularly, when a program is built in a system, it is necessary to minimize the capacity of memory that is used for program execution in most of the systems. Therefore, the program of the two-dimensional table driving system is not suitable for built-in systems.

According to the installation method of the logic driving system, codes are prepared for each state to branch actions corresponding to all events. Therefore, when the number of events or states has increased, the quantity of program codes becomes huge.

On the other hand, according to the conventional system of installing a program from the state driven state transition matrix, it is necessary to hold various kinds of information for each state. Therefore, the size of the state information table becomes huge. Further, the quantity of program codes of the state scheduler becomes huge in order to process this huge amount of information. Therefore, the required capacity of the memory for program execution also increases. Consequently, there is a problem that it is not possible to apply the installation using the state scheduler to most of the built-in systems.

### SUMMARY OF THE INVENTION

It is an object of the present invention to provide a program that generates a program that is optimum for a built-in system, by reducing the quantity of program codes and the size of the memory used to execute the program, and by improving the execution speed of the program generated.

In order to achieve the object, according to a first aspect of the present invention, there is provided a program generation program that makes a computer execute, an input step of inputting an event driven state transition matrix, having a plurality of cells, each cell being specified by a state that a system for which a program is developed can take and by an event that is a stimulus from the outside or the inside of the system, and describing in each cell, action contents that the system should execute when an event occurs under a corresponding state or a state of a transition destination to which the state should be transited, an action table generation step of generating an action table that describes action contents for each state, by extracting only cells that describe the action contents to be executed by the system from the state transition matrix, a transition table generation step of generating a transition table that describes a state of the transition destination for each state, by extracting only cells that describe states of transition destinations from the state transition matrix, an event table generation step of generating an event table that describes an event that exists in each state from the state transition matrix, and an execution processing generation step of generating an execution processing program to be operated in the system, by confirming existence of an event under each state by referring to the event table when an event has occurred, and by executing action contents of a cell corresponding to an event that has occurred in the current state by referring to the action table and the transition table.

According to the first aspect, the action table that describes action contents for each state is generated by extracting only cells that describe action contents to be executed by the system or states of transition destinations from the event driven state transition matrix. Further, the transition table that describes a state of a transition destination for each state is generated by extracting only cells that describe action contents or states of transition destinations from the event driven state transition matrix. Therefore, the quantity of program codes becomes smaller than that when a table that describes action contents and a transition destination in all cells is generated.

Further, the tables are generated for only cells in which action contents and a transition destination exist. Therefore, it is possible to execute a program in a similar manner to the conventional practice, by generating an execution processing program, by generating an event table that describes an event that exists in each state, confirming existence of an event under each state by referring to the event table when an event has occurred, and executing action contents of a cell corresponding to an event occurred in the current state.

Therefore, according to the first aspect, it becomes possible to reduce the quantity of program codes and the memory size to be used, without affecting the execution of the program.

According to a second aspect of the invention, there is provided a program generation program that makes a computer execute, an input step of inputting a state driven state transition matrix to be used to monitor the occurrence of an event in each state, the state transition matrix having a plurality of cells, each cell being specified by a state that a system for which a program is developed can take and by an event that is a stimulus from the outside or the inside of the system, and describing in each cell, action contents that the system should execute or a state of a transition destination to which the state should be transited, a state activity information table generation step of generating a state activity information table that describes an event analysis processing or a standard processing for each state, from the state transition matrix, a master state ID information table generation step of generating a master state ID information table that describes in a list identification information of a master state as a high-order state, from the state transition matrix, a sub state ID information table generation step of generating a sub state ID information table that describes in a list identification information of a sub state as a lower state than the master state, from the state transition matrix, and an execution processing generation step of generating an execution processing program to be operated in the system, by deciding whether each state is a master state or a sub state based on the master state ID information table and the sub state ID information table, and by executing an event analysis processing or a standard processing for each state based on a result of the decision and the state activity information table.

According to the second aspect, the state activity information table is generated, and an event analysis processing or a standard processing is defined for each state. Further, the master state ID information table and the sub state ID information table are generated, and a master state or a sub state is defined for each state. Based on this, an execution processing program is generated, by deciding whether each sate is a master state or a sub state based on the master state ID information table and the sub state ID information table, at the time of executing a program, and by executing an event analysis processing or a standard processing for each state based on a result of this decision and the state activity information table. Therefore, it is not necessary to store in advance a relationship between a master stateand a sub state for each state. It is possible to reduce the size of the state information table that relates to a state. Further, at the time of executing a program, whether each sate is a master state or a sub state is decided, and an event analysis processing or a standard processing is executed for each state based on a result of this decision and the state activity information table. Therefore, it is not necessary to provide a state scheduler. As a result, according to the present invention, it is possible to reduce the quantity of program codes and reduce the memory capacity as compared with those of the conventional installation system. Further, it is possible to improve the program execution speed.

The computer program comprises code means for executing the steps of the invention on the programmed computer. The invention also provides apparatus for generating a computer program, the apparatus being in the form of a computer system programmed to execute the invention. Further, the invention provides a method of generating a program, the method comprising the steps mentioned above. The computer program of the invention may, of course, be encoded on a computer readable storage medium or computer program product.

The invention will be further described by way of example with reference to the accompanying drawings, in which:-
Fig. 1 is a block diagram which shows a functional structure of a C language program generation apparatus relating to a first embodiment.
Fig. 2 is an explanatory diagram which shows one example of a state transition matrix.
Fig. 3 is an explanatory diagram which shows one example of a state transition diagram.
Fig. 4 is a flowchart which shows an analysis processing procedure of a processing executed by an STM analysis section 103 of the C language program generation apparatus relating to the first embodiment.
Fig. 5 is a flowchart of a processing executed by an action processing generator of the C language program generation apparatus relating to the first embodiment.
Fig. 6 is a flowchart of an action table generation processing to be executed by an action table generator of the C language program generation apparatus relating to the first embodiment.
Fig. 7 is a flowchart of a transition table generation processing to be executed by a transition table generator of the C language program generation apparatus relating to the first embodiment.
Fig. 8 is a flowchart of an event table generation processing to be executed by an event table generator of the C language program generation apparatus relating to the first embodiment.
Fig. 9 is a flowchart of an event table generation processing to be executed by an execution processing generator 111 of the C language program generation apparatus relating to the first embodiment.
Fig. 10 is an explanatory diagram which shows one example of an action table that is generated based on the state transition matrix shown in Fig. 2.
Fig. 11 is an explanatory diagram which shows one example of a transition table that is generated based on the state transition matrix shown in Fig. 2.
Fig. 12 is an explanatory diagram which shows one example of an event table that is generated based on the state transition matrix shown in Fig. 2.
Fig. 13 is an explanatory diagram which shows one example of a reference portion of each table in an execution processing program that is generated based on the state transition matrix shown in Fig. 2.
Fig. 14 is a block diagram which shows a functional structure of a C language program generation apparatus relating to a second embodiment.
Fig. 15 is a flowchart of an event analysis processing to be executed by an event analysis processing by-state generator of the C language program generation apparatus relating to the second embodiment.
Fig. 16 is a flowchart of a state activity information table generation processing to be executed by a state activity information table generator of the C language program generation apparatus relating to the second embodiment.
Fig. 17 is a flowchart of a master state ID information table generation processing to be executed by a master state ID information table generator of the C language program generation apparatus relating to the second embodiment.
Fig. 18 is a flowchart of a sub state ID information table generation processing to be executed by a sub state ID information table generator of the C language program generation apparatus relating to the second embodiment.
Fig. 19 is an explanatory diagram which shows one example of a state activity information table that is generated based on the state transition matrix shown in Fig. 2.
Fig. 20 is an explanatory diagram which shows one example of a master state ID information table that is generated based on the state transition matrix shown in Fig. 2.
Fig. 21 is an explanatory diagram which shows one example of a sub state ID information table that is generated based on the state transition matrix shown in Fig. 2.
Fig. 22 is an explanatory diagram which shows one example of an execution processing program that is generated based on the state transition matrix shown in Fig. 2.
Fig. 23 is an explanatory diagram which shows a state transition matrix in an event hierarchy that is input to a C language program generation apparatus relating to a third embodiment.
Fig. 24 is an explanatory diagram which shows a state transition matrix in a state hierarchy that is input to the C language program generation apparatus relating to the third embodiment.
Fig. 25 is an explanatory diagram which shows a state transition matrix built in with a concurrent state that is input to a C language program generation apparatus relating to a fourth embodiment.
Fig. 26 is an explanatory diagram which shows a state transition matrix that describes events in an event occurrence format that is input to a C language program generation apparatus relating to a fifth embodiment.
Fig. 27 is an explanatory diagram which shows one example of a state transition matrix having an inmail event that is input to the C language program generation apparatus relating to the fifth embodiment, and a program that is generated from the description of the inmail event.
Fig. 28 is an explanatory diagram which shows one example of a state transition matrix having an interrupt event that is input to the C language program generation apparatus relating to the fifth embodiment, and a program that is generated from the description of the interrupt event.
Fig. 29 is an explanatory diagram which shows one example of a state transition matrix having a function-call event that is input to the C language program generation apparatus relating to the fifth embodiment, and a program that is generated from the description of the function-call event.
Fig. 30 is an explanatory diagram of a state transition matrix having a deep-memorized transition that is input to a C language program generation apparatus relating to a sixth embodiment.
Fig. 31 is an explanatory diagram of a state transition matrix having an assignment of an event activity that is input to a C language program generation apparatus relating to an eighth embodiment.
Fig. 32 is an explanatory diagram of a state transition matrix having an assignment of a state activity that is input to the C language program generation apparatus relating to the eighth embodiment.
Fig. 33 is a block diagram which shows a hardware structure of the C language program generation apparatus relating to the first and second embodiments.

### DETAILED DESCRIPTIONS

Embodiments of the program relating to the present invention will be explained in detail below with reference to the accompanying drawings. The embodiments described below are applied to a C language program generation program.

A C language program generation apparatus of a first embodiment generates Clanguage program codes (source codes) from the event driven state transition matrix.

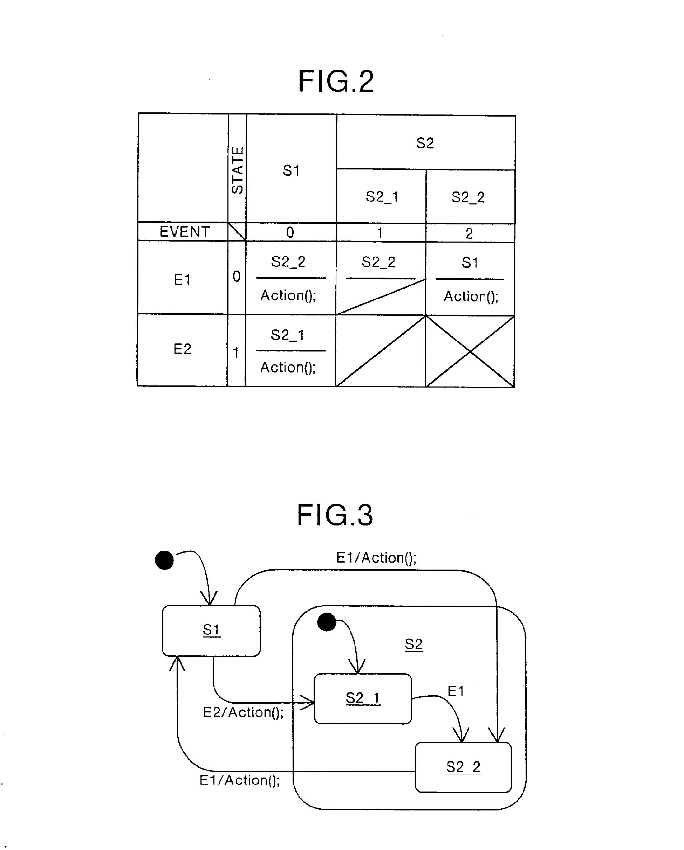

The state transition matrix will be explained in detail below. Fig. 2 is an explanatory diagram which shows one example of a state transition matrix. The state transition matrix shows events (occurrence events) that a system for development receives, in rows, and shows states that the system can take, in columns. The state transition matrix further describes a state of a next transition destination at an upper stage of each cell that is a cross point between an event and a state, and describes an action at a lower stage of the cell. The state transition matrix shows that when a certain event has occurred while the system is in a certain state, the system executes an action that is described in the cell where the current state and the received event cross, and thereafter, the system transits to a state of a transition destination described in the cell. For example, in Fig. 2, there are E1 (even No. 0) and E2 (event No. 1) as events, and there are S1 (state No. 0) and S2 as states. It is assumed that the state S2 has S2_1 (state No. 1) and S_2 (state No. 2) as sub states.

Assume that the current state of the system expressed in this state transition matrix is S1, and the system has received the event E1 (the event E1 has occurred) in this state. In this case, the system executes an action function Action ( ) that is described in the cell in which E1 and S1 cross, and the state of the system transits to S2_2 that is described in this cell.

Fig. 3 is a state transition diagram that describes the operation of a system that is the same as the operation described in the state transition matrix shown in Fig. 2. It is easier to understand the same operation of the system from the state transition matrix than from the state transition diagram. As compared with the state transition diagram that shows all transition destinations of events and actions for all states as cells, the state transition matrix can express all patterns of states and events without fail, and can express the operation of the system more clearly.

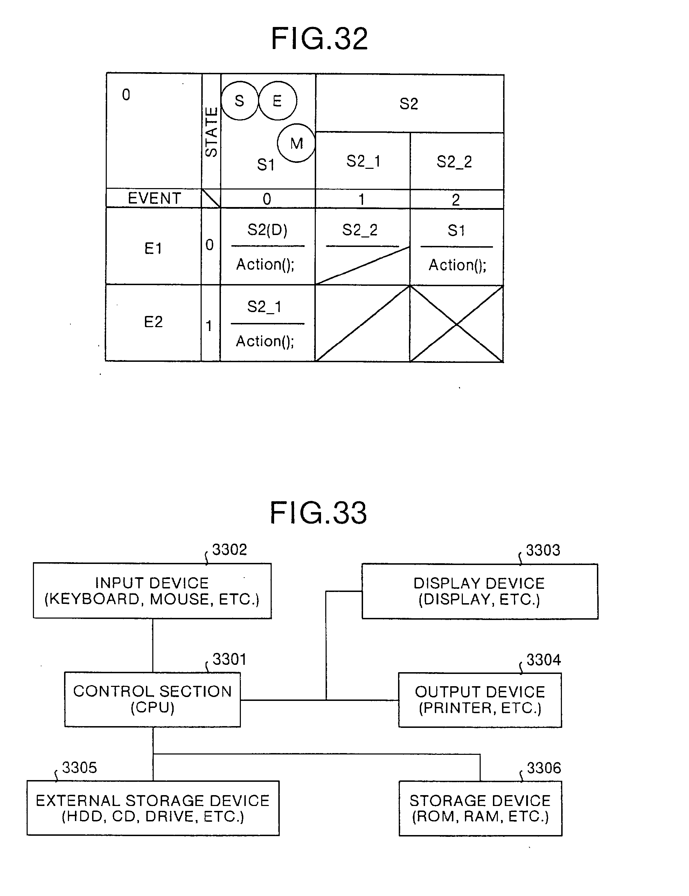

Fig. 33 is a block diagram which shows a hardware structure of the C language program generation apparatus relating to the first embodiment of the present invention. This C language program generation apparatus is constructed from a control section 3301 such as a central processing unit (CPU), a storage device 3306 such as a read-only memory (ROM) and a random access memory (RAM), an external storage device 3305 such as a hard disk, a hard disk drive (HDD), and a compact disk (CD) drive device, an output device 3304 such as a printer, a display device 3303 such as a display, and an input device like a keyboard and a mouse. This hardware structure is an ordinary structure that utilizes a computer.

A C language program generation program relating to the first embodiment is stored in the external storage device 3305. The C language program generation program is loaded from the external storage device 3305 to the storage device 3306, and executed. The hard disk stores a state transition matrix, and a C language program code file that is generated from the state transition matrix by the C language program generation program.

The display device 3303 displays a state transition matrix to be described later. This state transition matrix is completed via the input device 3302 like the keyboard and the mouse, and the state transition matrix is input to the program generation program from the input device 3302.

The state transition matrix is input from the input device 3302 based on a user operation. The prepared state transition matrix and generated C language program codes are output to the printer as the output device 3304.

The C language program generation program to be executed by the C language program generation apparatus of the present embodiment is provided in a file of a format that can be installed on a CD-ROM or an FD. The file of a format that can be installed may be provided by downloading from a network. It is also possible to distribute the C language program generation program of the present embodiment by utilizing a network.

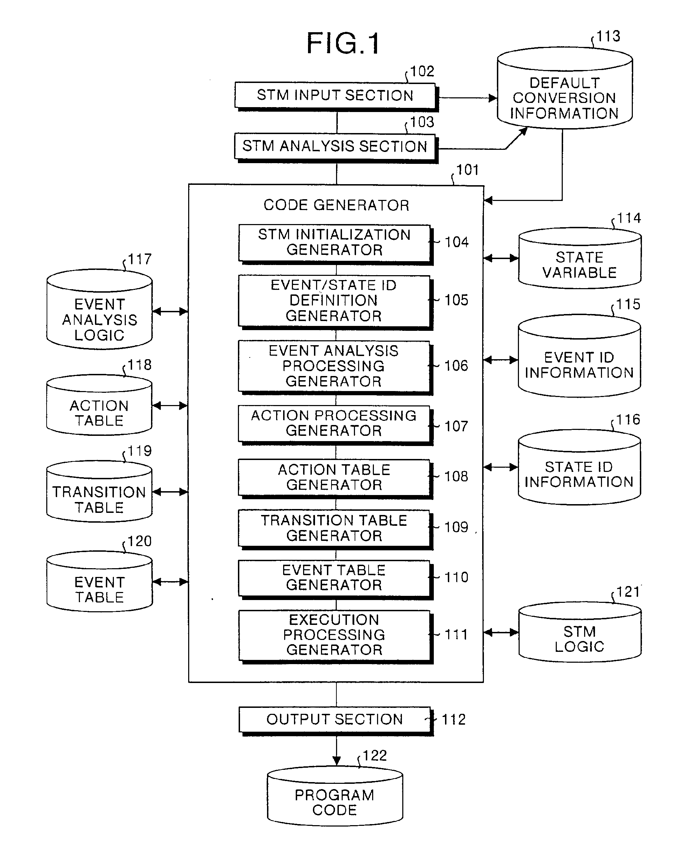

A functional structure of the C language program generation apparatus relating to the first embodiment will be explained. Fig. 1 is a block diagram which shows a functional structure of the C language program generation apparatus relating to the first embodiment. A functional structure of the C language program generation apparatus is realized by executing the C language program generation program relating to the first embodiment and loading it onto a RAM.

As shown in Fig. 1, the C language program generation apparatus relating to the first embodiment includes an STM input section 102 that inputs a state transition matrix, an STM analysis section 103 that carries out a grammatical check of a format of the state transition matrix, a code generator 101 that generates C language program codes (source codes) 122 from the input state transition matrix, and an output section 112 that stores the generated program codes in a hard disk or the like.

The code generator 101 includes an STM initialization generator 104, an event/state ID definition generator 105, an event analysis processing generator 106, an action processing generator 107, an action table generator 108, a transition table generator 109, an event table generator 110, and an execution processing generator 111.

In Fig. 1, default conversion information 113, a state variable 114, event ID information 115, state ID information 116, an event analysis logic 117, an action table 118, a transition table 119, an event table 120, an STM logic 121, program codes 122 are all prepared in a file format in the program generation process. The prepared results are stored in the external storage device 3305.

The STM input section 102 displays a state transition matrix editor in the display device 3303, inputs a state transition matrix prepared by a user using the state transition matrix editor from the input device 3302, and stores the state transition matrix in the external storage device 3305. Further, the STM input section 102 inputs the default conversion information 113 prepared by the user using the state transition matrix editor from the input device 3302, and stores it in the external storage device 3305.

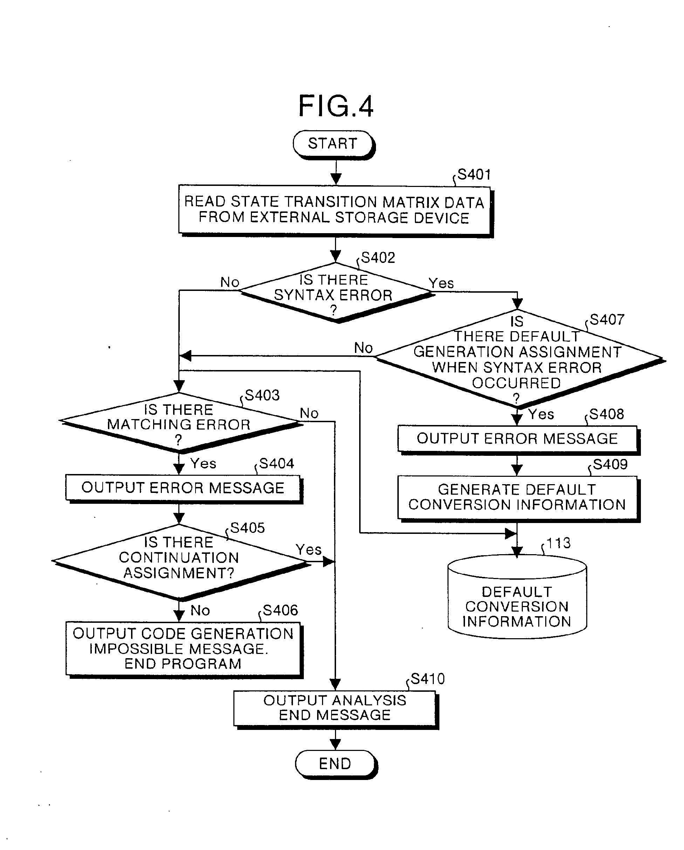

The STM analysis section 103 carries out a grammatical check of a format of the state transition matrix. Fig. 4 is a flowchart which shows an analysis processing procedure of a processing executed by the STM analysis section 103 of the C language program generation apparatus relating to the first embodiment.

The STM analysis section 103 first reads a state transition matrix from the external storage device (step S401), and analyzes presence or absence of a syntax error (step S402). When there is no syntax error, the STM analysis section 103 checks presence or absence of a matching error (step S403). When there is no matching error, the STM analysis section 103 outputs an analysis end message to the display device 3303 or the output device 3304, and finishes the processing (step S410). When there is a matching error, the STM analysis section 103 outputs an error message (step S404), and when there is no user continuation assignment, the STM analysis section 103 outputs a code generation impossible message, and finishes the processing (steps S405 and S406).

When a syntax error is found at step S402, the STM analysis section 103 checks whether the user has assigned a default generation (step S407). When there is an assignment of default generation, the STM analysis section 103 outputs an error message (step S408), and generates default conversion information (step S409).

The default conversion information 113 is event analysis information that is automatically generated when event conversion information has not yet been registered. For example, when conversion information of "#CHG E1 data.code = = EVENT1" is registered as the event E1, and also nothing is registered for the event E2, the event analysis processing is generated as follows in a similar manner to that of E1.

if(data.code = = EVENT1) {action execution processing (event ID1);} else if (E2) {action execution processing (event ID2);}

The default conversion information generated also includes information about which one of if-else statement, if-if statement, and switch is used.

The STM initialization generator 104 inputs the default conversion information 113, declares variables by the number of state transition matrixes, and generates an STM initialization processing file that gives an initial value to each variable. The STM initialization processing file describes a processing for initializing the current state.

The event/state ID definition generator 105 obtains all events and states from a state transition matrix, and generates the event ID information 115 that allocates an event ID of each event, and the state ID information 116 that allocates a state ID of each state, in a file format respectively.

The event analysis processing generator 106 obtains all events that are defined in the state transition matrix, and generates a processing that decides whether the received event coincides with the event defined in the state transition matrix, as the event analysis logic 117. In this instance, the event analysis processing generator 106 inputs the default conversion information 113. When the event decision processing is registered, the event analysis processing generator 106 generates the event analysis logic 117 by using this event decision processing.

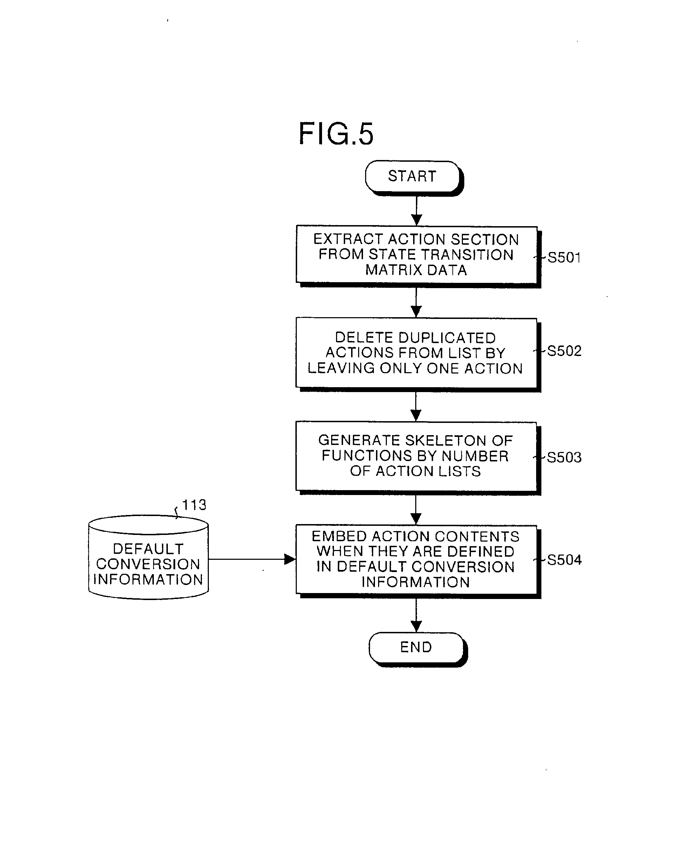

The action processing generator 107 reads actions that are defined in the state transition matrix, and generates an action processing file that substantially defines an action of a cell in which the current state and the received event cross. Fig. 5 is a flowchart of a processing executed by the action processing generator 107 of the C language program generation apparatus relating to the first embodiment.

The action processing generator 107 extracts an action section from the data of the state transition matrix (step S501), and adds the action section as an action list. When actions are duplicated, one action is left, and the rest are deleted from the action list (step S502). Next, the action processing generator 107 generates a skeleton of a function (a description of only a function declaration without describing a processing of the function) as an action by the number of action lists (step S503). Then, the action processing generator 107 inputs the default conversion information 113. When processing contents of the function of the action (the contents to be described in the skeleton) have been defined, the action processing generator 107 embeds the processing contents into the skeleton (step S504).

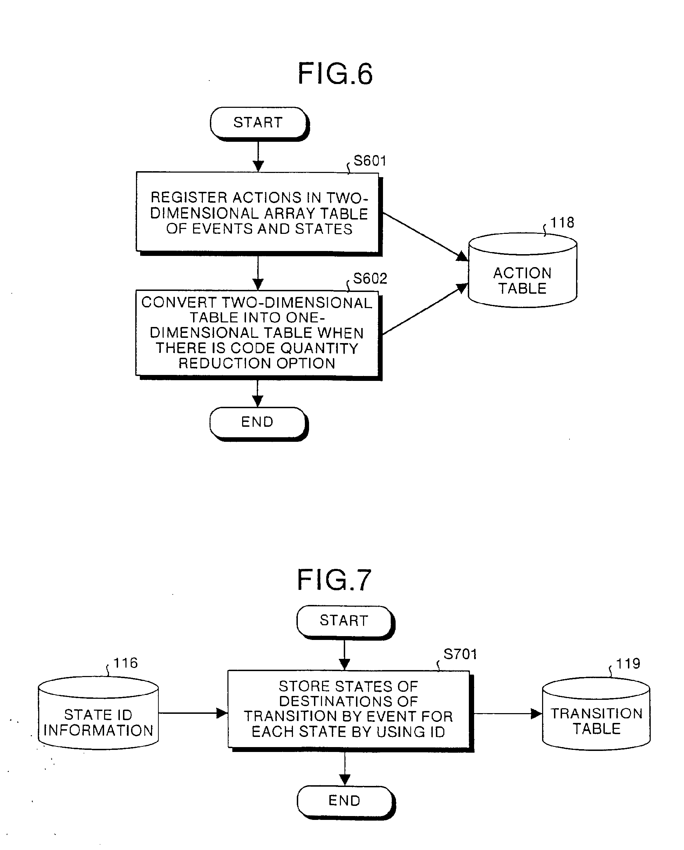

The action table generator 108 generates the action table 118. Fig. 6 is a flowchart of an action table generation processing to be executed by the action table generator 108 of the C language program generation apparatus relating to the first embodiment.

The action table generator 108 lists an action for each state from each cell in which an action or a state of a transition destination is defined in the state transition matrix, and prepares the action table 118 that registers the actions in a two-dimensional array table of events and states, in a file format (step S601). In this case, actions are extracted from only cells in which actions or states of transition destinations have been defined. Nothing is extracted from cells in which actions or states of transition destinations have not been defined.

When a code quantity reduction option is assigned by the user at the time of inputting a program generation command, the action table generator 108 converts the two-dimensional array table into a one-dimensional table to set it as the action table 118 (step S602).

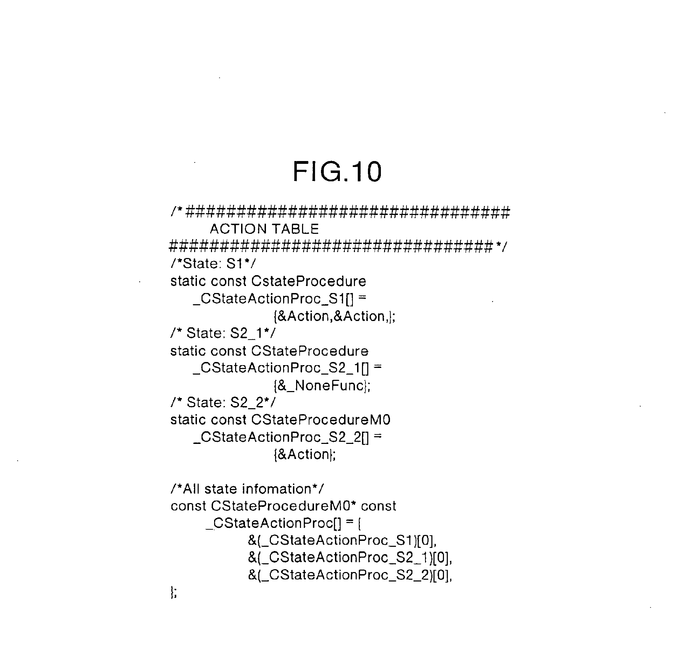

Fig. 10 is an explanatory diagram which shows one example of an action table generated based on the state transition matrix shown in Fig. 2. As shown in Fig. 10, in the action table 118, action functions Action ( ) are listed in tables for respective states (S1, S2_1, and S2_2) in arrays (_CStateActionProc_Sx[ ]). "&_NoneFunc" shows that a state of a transition destination exists but no action exists.

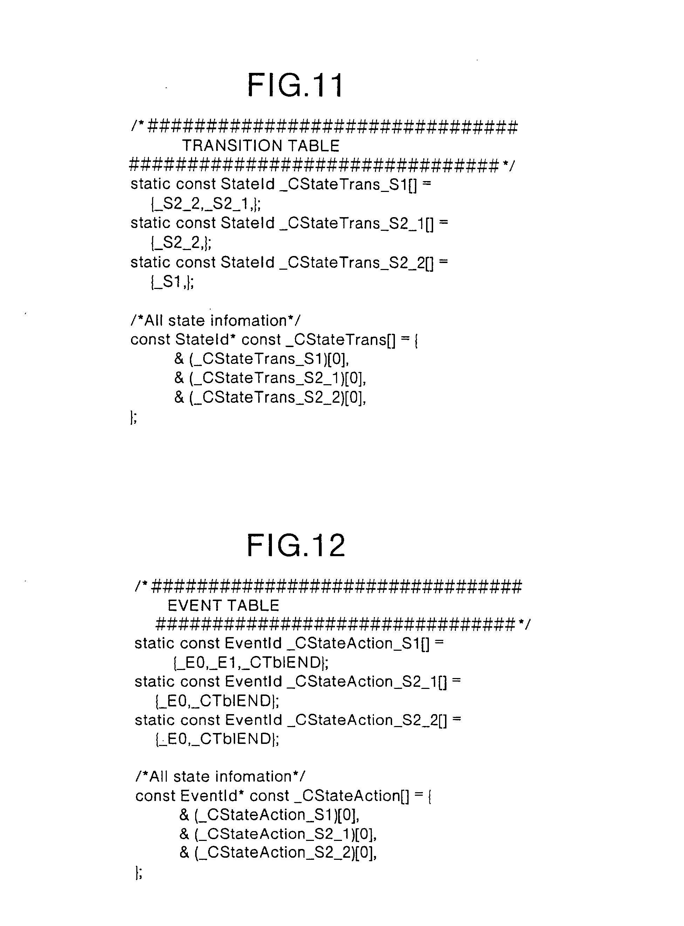

The transition table generator 109 generates a transition table from the data of the state transition matrix. Fig. 7 is a flowchart of a transition table generation processing to be executed by the transition table generator 109 of the C language program generation apparatus relating to the first embodiment. The transition table generator 109 extracts only cells in which actions or states of transition destinations are described from the data of the state transition matrix, and generates the transition table 119 that describes the states of the transition destinations for each state using an identifier (ID) in a table format (step S701). In this case, states of transition destinations are extracted from only cells in which actions or states of transition destinations have been defined. Nothing is extracted from cells in which actions or states of transition destinations have not been defined. Fig. 11 is an explanatory diagram which shows one example of the transition table 119 generated based on the state transition matrix shown in Fig. 2. As shown in Fig. 11, in the transition table, states of transition destinations are listed in tables for respective states (S1, S2_1, and S2_2) in arrays (_CStateTrans_Sx[ ]).

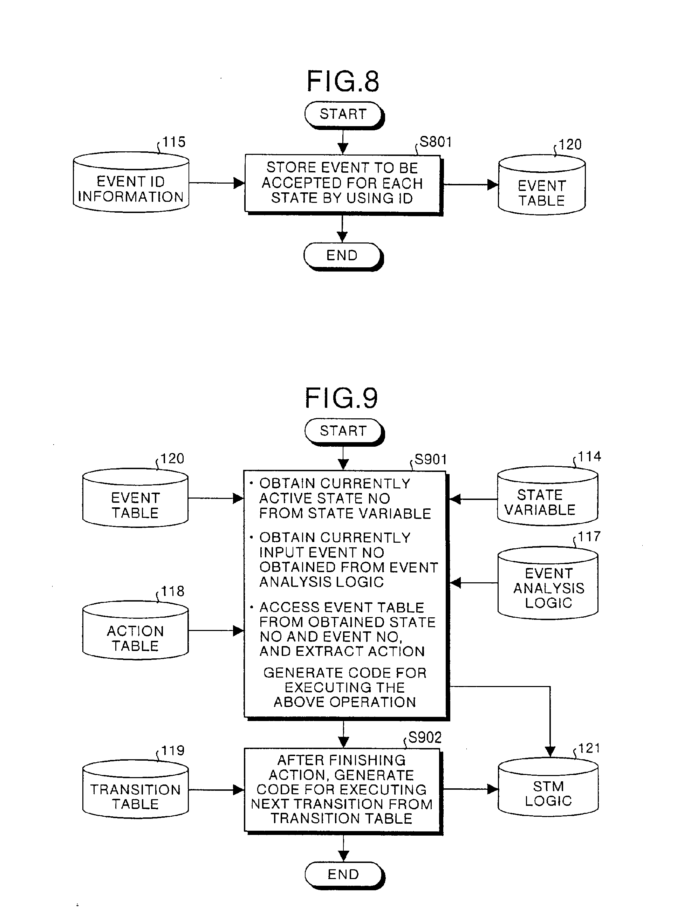

The event table generator 110 generates the event table 120 from the state transition matrix. Fig. 8 is a flowchart of an event table generation processing to be executed by the event table generator 110 of the C language program generation apparatus relating to the first embodiment. The event table generator 110 extracts an event that exists for each state, and generates the event table 120 that stores events to be accepted for each state using an identifier (ID) (step S801).

As described above, the action table 118 and the transition table 119 list in tables only cells in which actions or states of transition destinations are described. Therefore, in order to search a table at the time of executing an action in a state corresponding to a received event, an execution processing program to be described later is used to refer to this event table. In other words, it is decided whether an event exists in a state, based on this event table.

Fig. 12 is an explanatory diagram which shows one example of the event table 120 generated based on the state transition matrix shown in Fig. 2. As shown in Fig. 12, in the event table 120, event IDs of existing events (E0, E1, etc.) are listed in tables for respective states (S1, S2_1, and S2_2) in arrays (_CStateAction_Sx[ ]).

The execution processing generator 111 generates the program codes (C language source codes) 122 by obtaining events and states from the state transition matrix. Fig. 9 is a flowchart of an event table generation processing to be executed by the execution processing generator 111 of the C language program generation apparatus relating to the first embodiment.

The execution processing generator 111 generates a source code to execute the next execution processing (step S901), and stores the source code in the STM logic 121. Based on this source code, the execution processing generator 111 reads the state variable 114 to obtain a state (a state No.) that is active at present. Then, the execution processing generator 111 reads the event analysis logic 117 to obtain an event (an event No.) input at present. The execution processing generator 111 extracts a processing for extracting an action corresponding to the state and the event obtained by referring to the action table 118 and the event table 120.

After finishing the action, the execution processing generator 111 generates a processing for executing the next transition destination from the transition table 119, and adds it to the STM logic 121 (step S902).

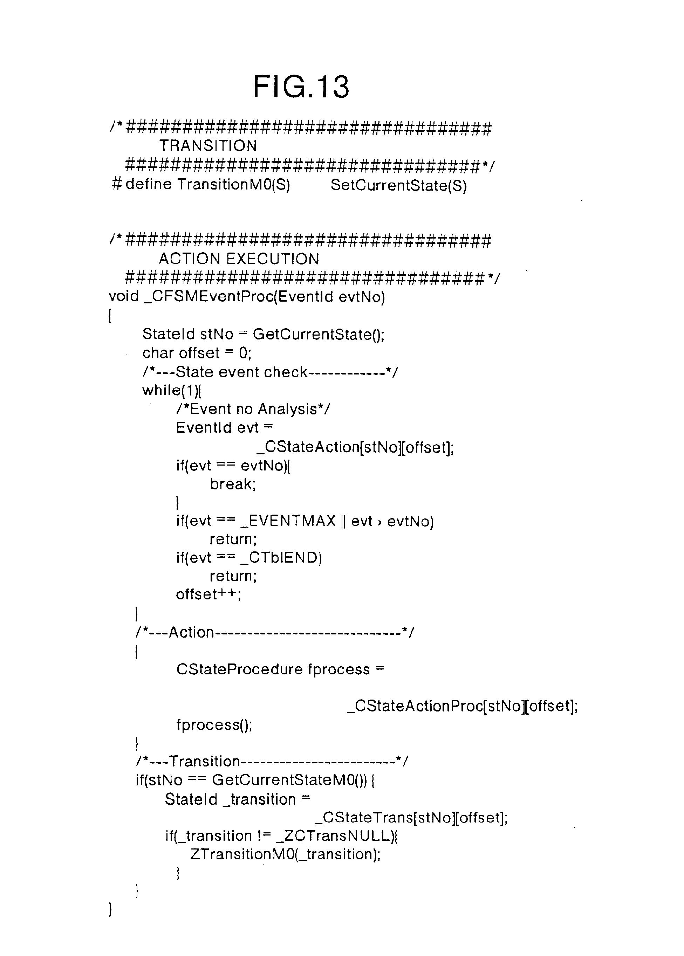

Fig. 13 is an explanatory diagram which shows one example of a reference portion of each table in the code generated based on the state transition matrix shown in Fig. 2. As shown in Fig. 13, in the code, the event table 120 is referred to based on _CStateAction [ ] [ ]. Further, it can be known that the action table 118 is referred to based on _CStateActionproc [ ] [ ], and the transition table 119 is referred to based on _CStateTrans [ ] [ ].

The output section 112 converts the state variable 114, the event table 120, the event ID information 115, state ID information 116, the action table 118, the transition table 119, the event analysis logic 117, and the STM logic 121 generated in the process, into the C language program codes 122, and stores the results in the external storage device 3305. Based on this, the C language program codes 122 are generated from the state transition matrix.

As explained above, according to the C language program generation apparatus and the C language program generation program of the first embodiment, in the event driven system, there are generated the action table that describes the action contents for each state, by extracting only cells that describe the action contents to be executed by the system or states of transition destinations, from the state transition matrix, and the transition table that describes a state of the transition destination for each state, by extracting only cells that describe states of action or transition destinations, from the state transition matrix. Based on this, it becomes possible to reduce the quantity of the program codes, and reduce the size of the memory to be used to execute a generated program. Therefore, it becomes possible to automatically generate a program optimum for a built-in system having a limit to the memory capacity.

According to the first embodiment, the C language program generation apparatus and the C language program generation program are used to generate the C language program code 122 based on the event driven state transition matrix. On the other hand, according to a second embodiment, a C language program generation apparatus and a C language program generation program are used to generate the C language program code 122 based on a state driven state transition matrix. A hardware structure of the C language program generation apparatus according to the second embodiment is similar to that of the first embodiment, and therefore, this explanation will be omitted.

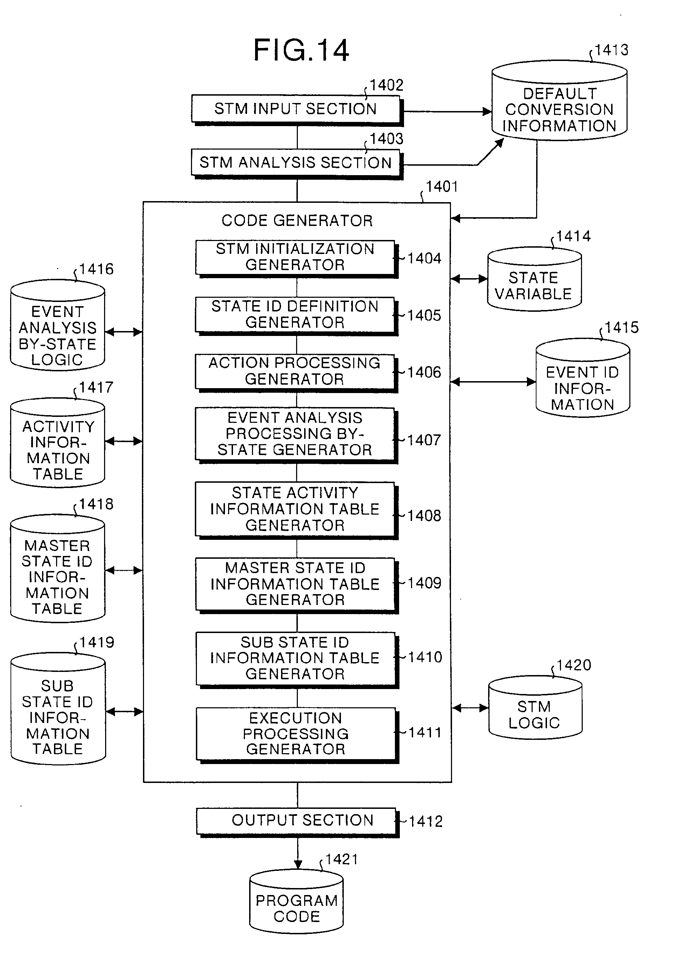

Fig. 14 is a block diagram which shows a functional structure of the C language program generation apparatus relating to the second embodiment of the present invention. The C language program generation apparatus relating to the second embodiment includes an STM input section 1402 that inputs a state transition matrix, an STM analysis section 1403 that carries out a grammatical check of a format of the state transition matrix, a code generator 1401 that generates C language program codes (source codes) 1421 from the input state transition matrix, and an output section 1412 that stores the generated program codes 1421 in an external storage device 3305 like a hard disk or the like. The functional structure of the C language program generation apparatus is realized by executing the C language program generation program relating to the second embodiment, and loading the program onto the RAM.

Default conversion information 1413, a state variable 1414, state ID information 1415, an event analysis by-state logic 1416, an activity information table 1417, a master state ID information table 1418, a sub state ID information table 1419, an STM logic 1420, program codes 1421 are all prepared in a file format in the program generation process. The prepared results are stored in the external storage device 3305.

The code generator 1401 includes an STM initialization generator 1404, a state ID definition generator 1405, an action processing generator 1406, an event analysis processing by-state generator 1407, a state activity information table generator 1408, a master state ID information table generator 1409, a sub state ID information table generator 1410, and an execution processing generator 1411.

The STM input section 1402 and the STM analysis section 1403 are similar to those of the C language program generation apparatus according to the first embodiment, and therefore, their explanation will be omitted.

The STM initialization generator 1404 obtains a variable for managing a state from the state transition matrix, and generates an STM initialization processing file, in a similar manner to that of the C language program generation apparatus according to the first embodiment. A processing to initialize the current state is described in the STM initialization processing file.

The state ID definition generator 1405 obtains all states from the state transition matrix, allocates the state IDs to these states, and generates the sate ID information 1415 in a file format. In order to generate the C language program codes based on the state driven state transition matrix, the C language program generation apparatus of the second embodiment carries out an event analysis for each state in the following processing. For this purpose, only the state IDs are allocated, and the event IDs are not allocated.

The action processing generator 1406 reads actions that are defined in the state transition matrix, and generates an action processing file that substantially defines an action of a cell in which the current state and the received event cross. A specific processing is similar to the processing by the action processing generator 107 explained in the first embodiment.

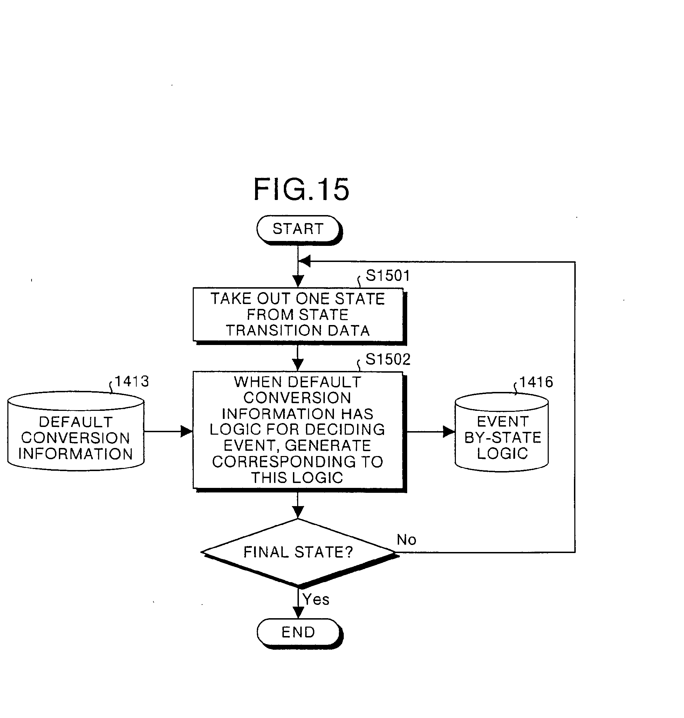

The event analysis processing by-state generator 1407 obtains all events that are defined in the state transition matrix for each state, and generates an event analysis by-state processing file, based on which an analysis processing to decide whether a received event coincides with an event defined in the state transition matrix is carried out for each state. Fig. 15 is a flowchart of an event analysis processing to be executed by the event analysis processing by-state generator 1407 of the C language program generation apparatus relating to the second embodiment. The event analysis processing by-state generator 1407 first obtains one state from the data of the state transition matrix (step S1501). The event analysis processing by-state generator 1407 reads the default conversion information 1413. When the default conversion information 1413 has a logic for deciding an event, the event analysis processing by-state generator 1407 generates the event analysis by-state logic 1416 corresponding to this logic, and stores this logic in the external storage device 3305 (step S1502). The event analysis processing by-state generator 1407 repeatedly carries out the processing at steps S1501 and S1502 for all states that exist in the state transition matrix (step S1503), and finishes the event analysis processing after the last state is processed.

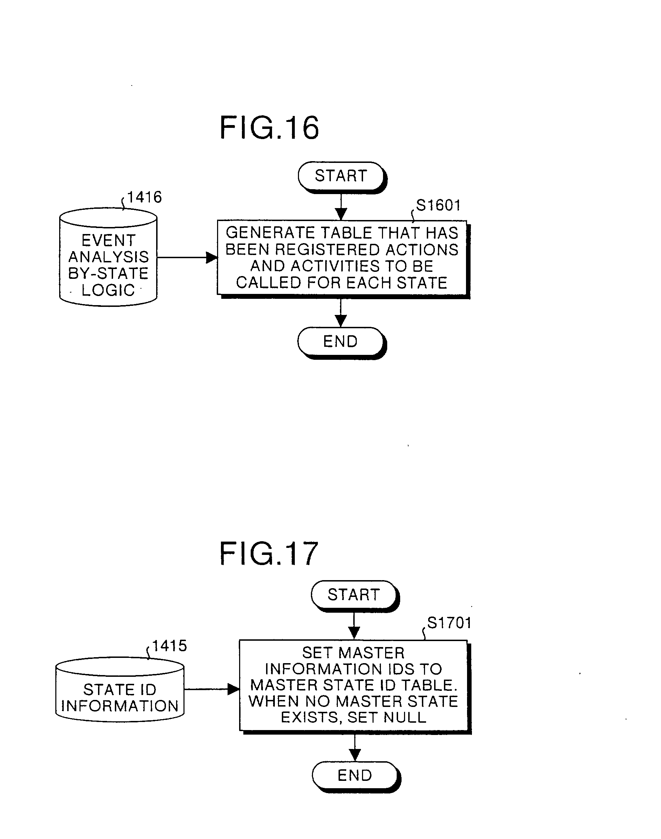

The state activity information table generator 1408 generates the state activity information table 1417. Fig. 16 is a flowchart of a state activity information table generation processing to be executed by the state activity information table generator 1408 of the C language program generation apparatus relating to the second embodiment.

The state activity information table generator 1408 reads the event analysis by-state logic 1416, and generates the state activity information table 1417 that registers actions and activities to be called for each state (step S1601). An activity shows a standard processing at a state transition time.

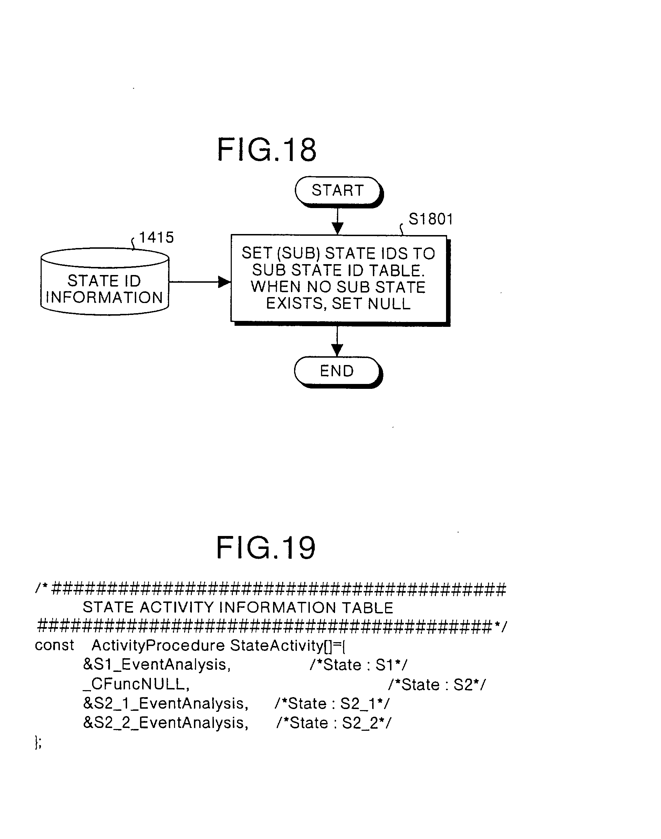

Fig. 19 is an explanatory diagram which shows one example of the state activity information table 1417 generated based on the state transition matrix shown in Fig. 2. As shown in Fig. 19, in the state activity information table, event analysis processing functions (Sx_EventAnalysis) are registered for respective states (S1, S2_1, S2_2). In the state transition matrix shown in Fig. 2, no activity is described. Therefore, there is no registration of an activity function. However, when the state transition matrix has a description of activities, they are registered in the state activity information table 1417 like the event analysis processing functions. "CFunc_NULL" shows that there is no function.

The master state ID information table generator 1409 generates the master state ID information table 1418. Fig. 17 is a flowchart of a master state ID information table generation processing to be executed by the master state ID information table generator 1409 of the C language program generation apparatus relating to the second embodiment.

The master state ID information table generator 1409 reads the state ID information 1415. When each state is a master state having a sub state, the master state ID information table generator 1409 sets master information IDs to the master state ID information table 1418. When no master state exists, the master state ID information table generator 1409 generates the master state ID information table 1418 set with NULL (step S1701). A master state is a state that is at a higher order than the sub state. In the state transition matrix shown in Fig. 2, S2 becomes a master state. A sub state is a state that is at a lower order than the master state. In the state transition matrix shown in Fig. 2, S2_1 and S2_2 become sub states.

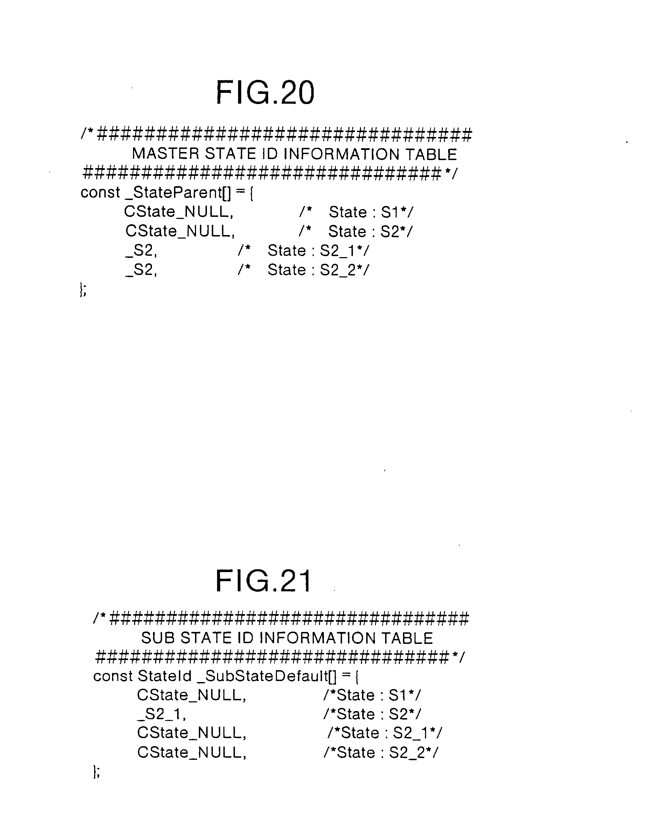

Fig. 20 is an explanatory diagram which shows one example of a master state ID information table generated based on the state transition matrix shown in Fig. 2. A master state ID of the master state S2 of the sub states S2_1 and S2_2 in the state transition matrix in Fig. 2 is defined as "_S2". "CState_NULL" shows that there is no master state.

The sub state ID information table generator 1410 generates the sub state ID information table 1419 from the state transition matrix. Fig. 18 is a flowchart of a sub state ID information table generation processing to be executed by the sub state ID information table generator 1410 of the C language program generation apparatus relating to the second embodiment.

The sub state ID information table generator 1410 reads the state ID information 1415, and sets an ID showing a sub state to the state ID of the read state. When there is no sub state, the sub state ID information table generator 1410 sets NULL, and generates the sub state ID information table 1419 (step S1801).

Fig. 21 is an explanatory diagram which shows one example of the sub state ID information table 1419 generated based on the state transition matrix shown in Fig. 2. In Fig. 21, a sub state ID of the sub state S2_1 of the master state S2 in the state transition matrix in Fig. 2 is defined as "_S2_1". "CState_NULL" shows that there is no sub state.

The execution processing generator 1411 obtains an event and a state from the state transition matrix, generates a source code to carry out the next processing, and stores the source code in the STM logic 1420. Based on this source code, the execution processing generator 1411 decides a higher order and a lower order of each state, by referring to the master state ID information table 1418 and the sub state ID information table 1419. The execution processing generator 1411 executes an event analysis processing or a standard processing for each state based on the activity information table 1417.

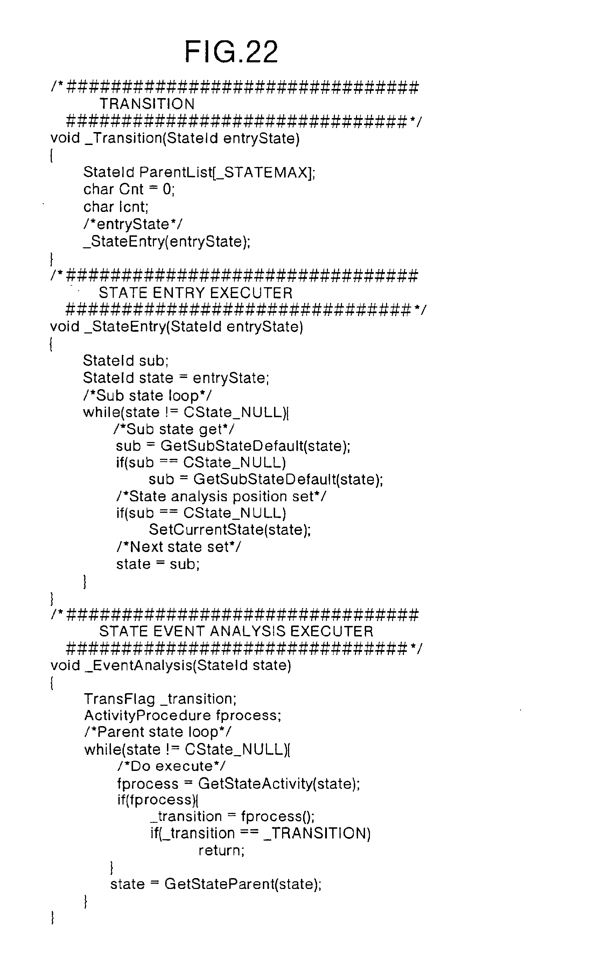

Fig. 22 is an explanatory diagram which shows one example of an execution processing program generated based on the state transition matrix shown in Fig. 2. As shown in Fig. 22, based on the execution processing program, it is decided whether each state is a master state or a sub state from the definitions made in the master state ID information table 1418 and the sub state ID information table 1419, according to _StateEntry function. Further, an event analysis processing is executed according to EventAnlysis function.

The output section 1412 generates C language program codes, and stores them in the external storage device 3305, in a similar manner to the C language program generation apparatus according to the first embodiment.

As explained above, according to the C language program generation apparatus and the C language program generation program of the second embodiment, the activity information table 1417 is generated, and an event analysis processing or a standard processing is defined for each state. Further, the master state ID information table 1418 and the sub state ID information table 1419 are generated, and a master state or a sub state is defined for each state. Based on this, program codes are generated, by deciding whether each sate is a master state or a sub state based on the master state ID information table and the sub state ID information table, at the time of executing a program, and by executing an event analysis processing or a standard processing for each state based on a result of this decision and the activity information table 1417. Therefore, it becomes possible to reduce the quantity of program codes, and reduce the quantity of memories used. As a result, it is possible to improve the program execution speed.

A C language program generation apparatus and a C language program generation program relating to a third embodiment are used to input one state transition matrix that is an integration of a plurality of state transition matrices by setting events and states in a hierarchy. A hardware structure, a functional structure, and a program generation processing of the C language program generation apparatus relating to the third embodiment are similar to those of the C language program generation apparatus of the first embodiment, and therefore, their explanation will be omitted.

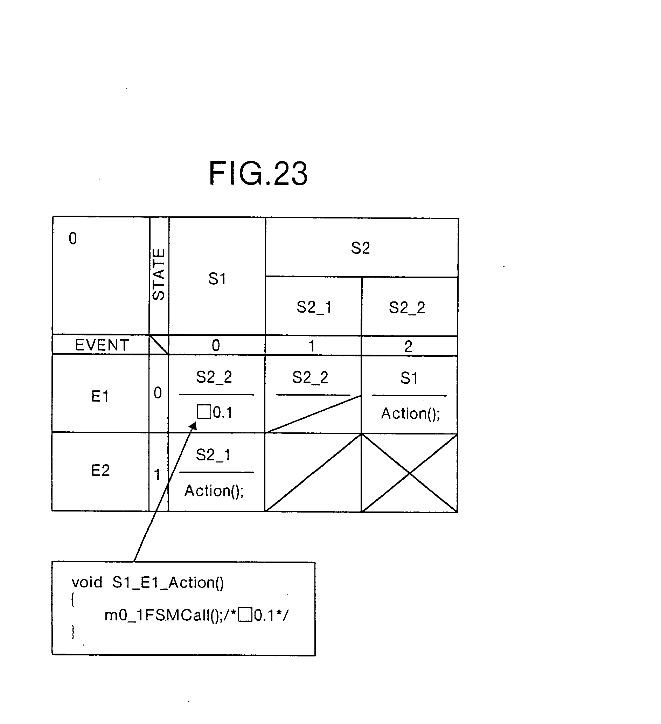

Fig. 23 is an explanatory diagram which shows a state transition matrix in an event hierarchy input to a C language program generation apparatus relating to the third embodiment. As shown in Fig. 23, in this state transition matrix, a symbol of "□ 0.1" is attached to a cell in which a state S1 and an event E1 cross, as an action of this cell. This shows a low-order state transition matrix. For this hierarchy portion, the code generator 101 generates aprogram of a m0_1FSMCall( ) function, as shown in Fig. 23.

When the state transition matrix is expressed in an event hierarchy like this, it becomes possible to abstract massive and complex events, thereby to prevent the state transition matrix from becoming huge and complex. Particularly, when a system for which a program is developed is connected to the Internet or the like, it is possible to describe many events in a hierarchy and not on a plane, as various kinds of commands and statuses exist for communication messages. Therefore, this is very convenient for users.

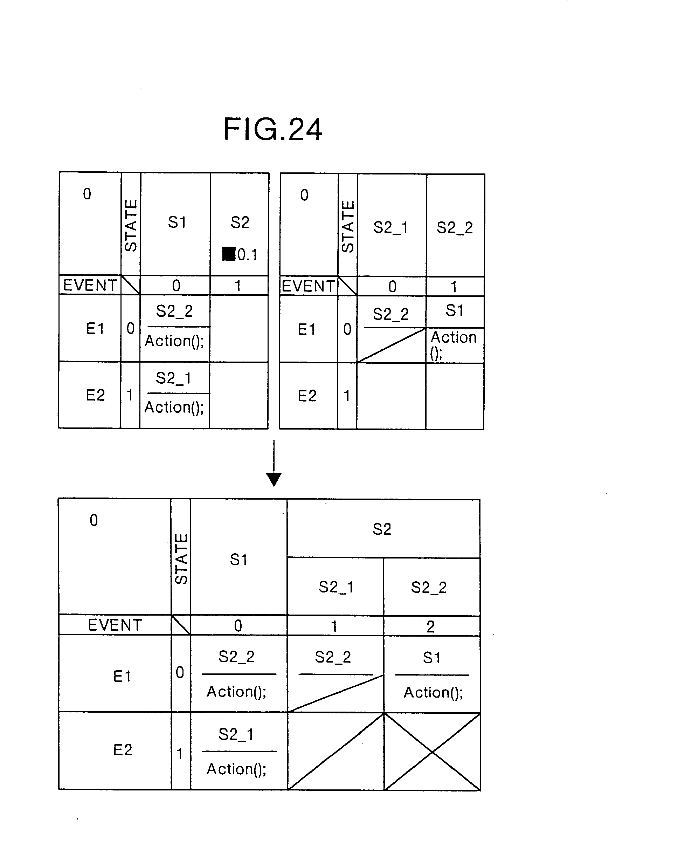

Fig. 24 is an explanatory diagram which shows a state transition matrix in a state hierarchy input to the C language program generation apparatus relating to the third embodiment. As shown in the upper diagram in Fig. 24, when the state transition matrix is not hierarchized, it is necessary to use two state transition matrices. However, according to the C language program generation apparatus and the C language program generation program relating to the third embodiment it is possible to describe sub states S2_1 and S2_2 of a state S2 in a low-order hierarchy as shown in the lower diagram in Fig. 24. With this arrangement, it becomes possible to abstract massive and complex states, and can prevent the state transition matrix from becoming huge and complex as a result. For example, when there are many modes (when meanings are different depending on modes even when one button is used) on a small liquid-crystal screen like that on a portable telephone, the number of states becomes huge when each mode is defined as a state. On the other hand, when states (modes) are expressed in a hierarchy, they can be concentrated into one state transition matrix, and it becomes possible to understand the system operation easily. Further, with this arrangement, it becomes possible to reduce the quantity of codes of a program generated from the state transition matrix. As a result, it becomes possible to reduce the quantity of memories that are used at the time of executing the program.

A C language program generation apparatus and a C language program generation program relating to a fourth embodiment are used to input a state transition matrix built in with a concurrent state. It is possible to employ this state transition matrix in the state driven installation system. A hardware structure, a functional structure, and a program generation processing of the C language program generation apparatus relating to the fourth embodiment are similar to those of the C language program generation apparatus of the second embodiment, and therefore, their explanation will be omitted.

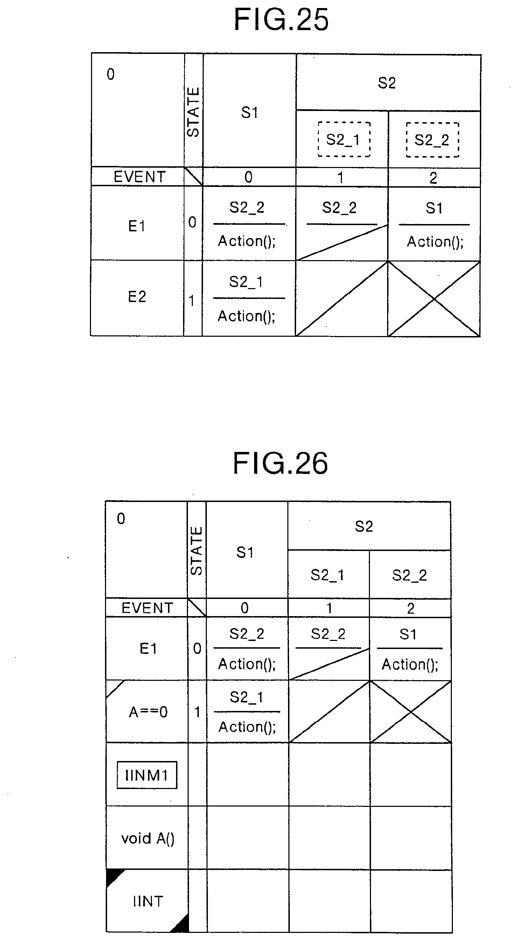

Fig. 25 is an explanatory diagram which shows a state transition matrix built in with a concurrent state input to a C language program generation apparatus relating to the fourth embodiment. As shown in Fig. 25, sates encircled with dotted line portions are the states that can be executed concurrently.

When the state transition matrix shown in Fig. 25 is input, the event analysis of S2_1 and S_2 in a concurrent state is executed in the event analysis processing of a state S2.

As explained above, according to the C language program generation apparatus and the C language program generation program relating to the fourth embodiment it is possible to restrict the increase in the number of states by the number of states executed concurrently, by inputting the state transition matrix built in with the concurrent state. Therefore, it is possible to reduce the quantity of codes of a program generated, and reduce the quantity of memories used at the time of executing the program. Further, it becomes possible to easily describe a concurrent processing of carrying out data communications while carrying out voice communications on a portable telephone in future by building a concurrent state in the state transition matrix.

A C language program generation apparatus and a C language program generation program relating to a fifth embodiment are used to input a state transition matrix that describes events by classifying the events in an occurrence format. A hardware structure, a functional structure, and a program generation processing of the C language program generation apparatus relating to the fifth embodiment are similar to those of the C language program generation apparatus of the first embodiment, and therefore, their explanation will be omitted.

Fig. 26 is an explanatory diagram which shows a state transition matrix that describes events in an event occurrence format input to a C language program generation apparatus relating to the fifth embodiment. An event occurrence format is classified into a variable memory event, an interrupt event, an inmail event, and a function-call event.

The variable memory event is an event that shows a change of a variable. "E1" and "A = =0" in the column of event in Fig. 26 correspond to variable memory events. The interrupt event is an event used for a CPU to directly notify to the program that there is an external stimulus. The description in the column of "IINT" in the event in Fig. 26 corresponds to this interrupt event. The inmail event is an event used to transmit and receive a message between state transition matrixes that are expressed in a hierarchy in the state transition matrix. The description in "INM1 ( )" encircled by a rectangle in the event in Fig. 26 corresponds to this inmail event. The function-call event is an event that shows a call for a function. The description of "void A ( ) " in the event in Fig. 26 corresponds to this function-call event.

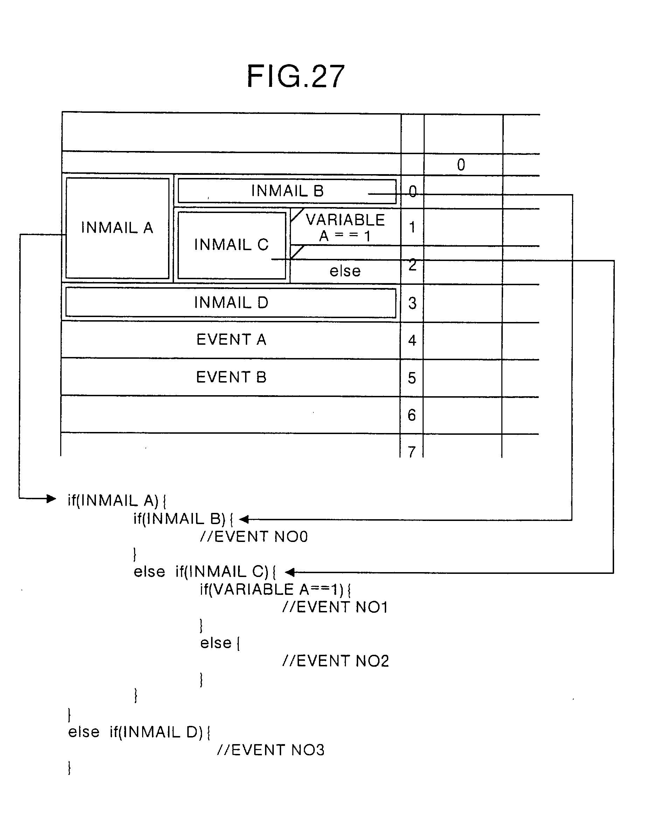

Fig. 27 is an explanatory diagram which shows one example of a state transition matrix having an inmail event input to the C language program generation apparatus relating to the fifth embodiment, and a program generated from the description of the inmail event. When the inmail event shown in Fig. 27 is input to the C language program generation apparatus, the code generator 101 sequentially analyzes the event from the left side of the column of the event. The code generator 101 first generates an if statement of an inmail A, and generates an if statement of an inmail B and an else if statement of an inmail C in parallel in the block of the if statement of the inmail A. The code generator 101 generates an if statement relating to a variable A in the right end column of the event, in the block of the else if statement of the inmail C.

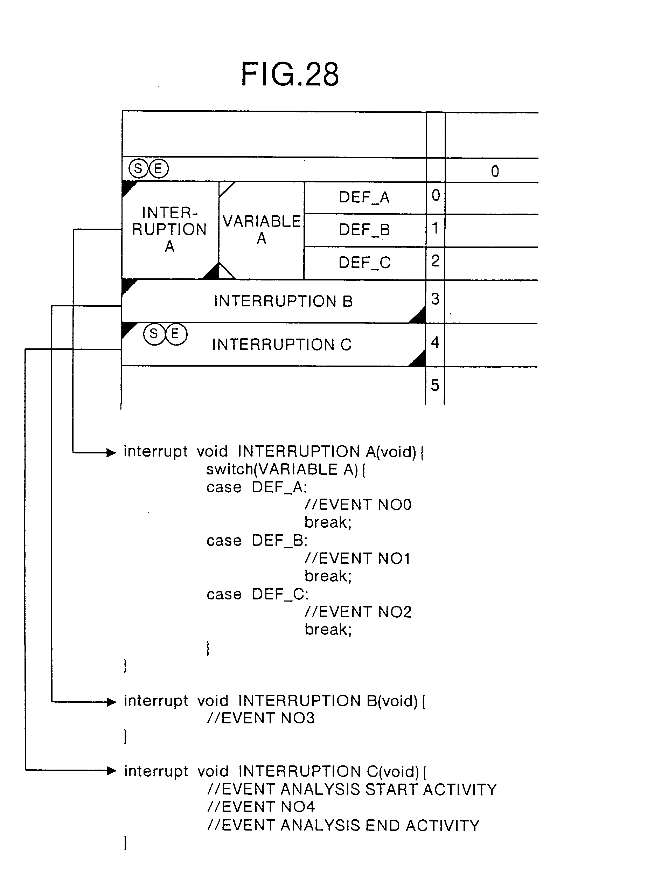

Fig. 28 is an explanatory diagram which shows one example of a state transition matrix having an interrupt event input to the C language program generation apparatus relating to the fifth embodiment, and a program generated from the description of the interrupt event. When the interrupt event shown in Fig. 28 is input to the C language program generation apparatus, the code generator 101 sequentially analyzes the event from the left side of the column of the event. The code generator 101 first generates an interrupt statement that shows that an interruption A is received, and generates a switch statement for deciding a value of a variable A in the middle column, in the block of this interrupt statement. Then, the code generator 101 generates in parallel case statements of values of DEF_A, DEF_B, and DEF_C that are described in the right end column of the event, in the block of this switch statement, and describes an event analysis (event No.) in the case statement.

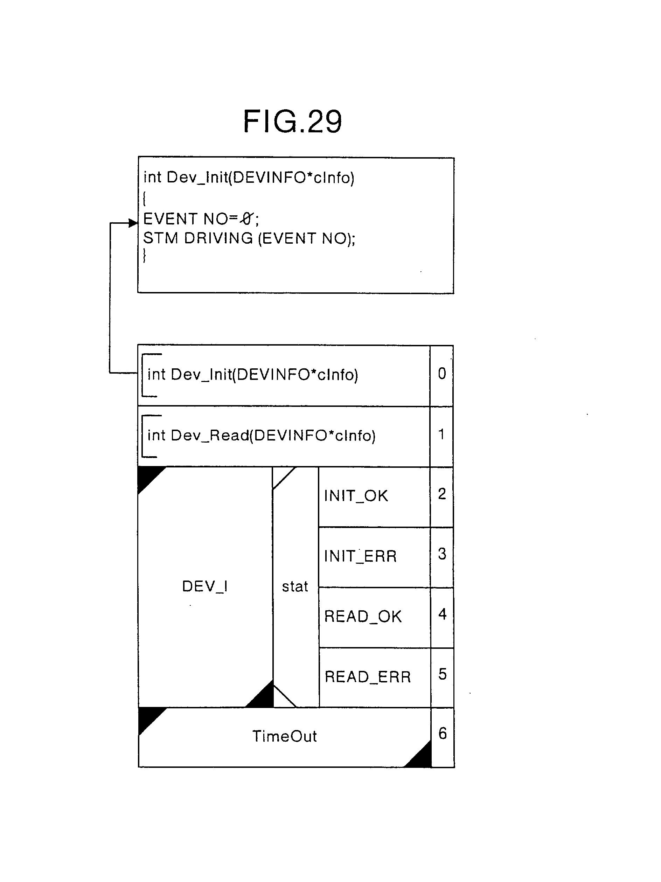

Fig. 29 is an explanatory diagram which shows one example of a state transition matrix having a function-call event input to the C language program generation apparatus relating to the fifth embodiment, and a program generated from the description of the function-call event. When the function-call event shown in Fig. 29 is input to the C language program generation apparatus, the code generator 101 generates a function described in the column of the event, and describes an event analysis (event No.) and a drive instruction (STM driving) of the state transition matrix within the function.

As explained above, according to the C language program generation apparatus and the C language program generation program relating to the fifth embodiment, it is possible to automatically generate a program code based on the information of the use of a system call of a real-time OS, the use of a variable, the use of a message buffer, the use of an interruption, and the use of a function call, by using the state transition matrix in which event types have been classified. Therefore, when a device driver or the like handles an interruption and also when a call is made from an application task, it is possible to generate program codes by making clear the correspondence between the program codes and a plurality of event types, by preparing these event types.

A C language program generation apparatus and a C language program generation program relating to a sixth embodiment are used to input a state transition matrix that determines a sub state of a transition destination when the state transited to a master state, based on a state of a predetermined abbreviation value or a state to which a state has transited in the past, when the state transition matrix has a state hierarchy. A hardware structure, a functional structure, and a program generation processing of the C language program generation apparatus relating to the sixth embodiment are similar to those of the C language program generation apparatus of the first embodiment, and therefore, their explanation will be omitted.

As methods of determining a transition destination, there are the following types of transition, a fixed transition that is a transition to a predetermined sub state, a memorized transition that is a transition to a sub state that has become active in the past, and a deep-memorized transition that is a transition to a sub state that has become active last time, by memorizing all sub states that have become active in the past.

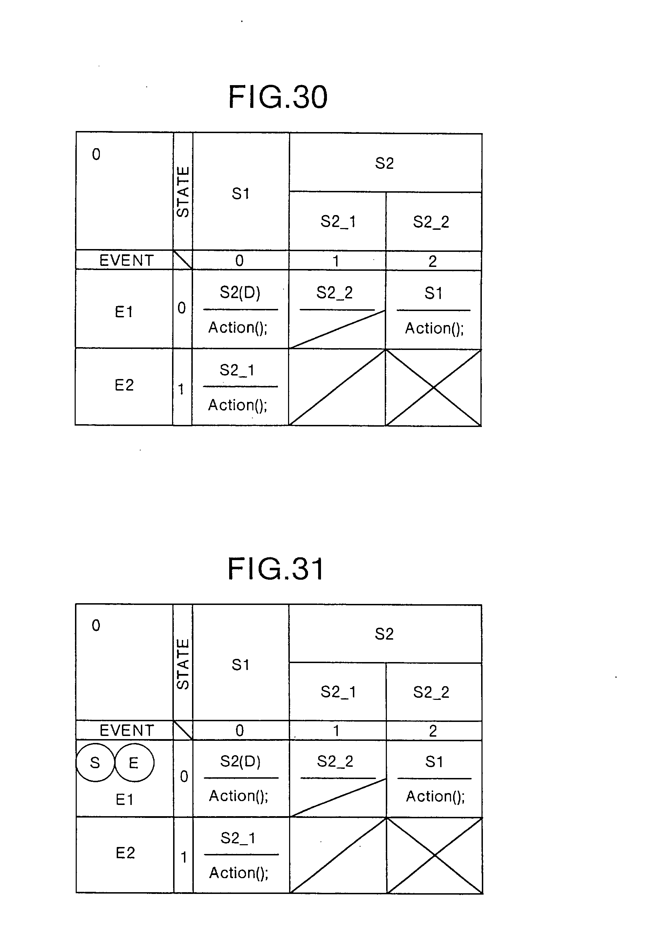

Fig. 30 is an explanatory diagram of a state transition matrix having a deep-memorized transition input to the C language program generation apparatus relating to the sixth embodiment. In Fig. 30, a transition to a sub state (S2_1, and S2_2) of a master state S2 to which a state transits when an event E1 has occurred in a state S1 is described as "S2(D)". Based on this description, the state transition becomes a deep-memorized transition, that is, a transition to a sub state that has become active last time. When a state transition is a fixed transition, this transition is described as "S2 (F)". When a state transition is a memorized transition, this transition is described as "S2(F)".

When the state transition matrix having the assignment of types of transition is input, the code generator 101 may generate a table having information or history of a transition destination. With this arrangement, it is not necessary to carry out the processing of standing a flag each time when a state transits to a transition destination.

As explained above, according to the C language program generation apparatus and the C language program generation program relating to the sixth embodiment, the state transition matrix that identifies the types of transition is used. Therefore, this facilitates the state management that has conventionally been carried out by standing a flag, and can conceal this type of management of state. For example, it becomes possible to generate an optimum program when it is necessary to store modes in which operation is carried out in the past, like in a combined machine mounted with a facsimile, a copying machine, and a printer.

A C language program generation apparatus and a C language program generation program relating to a seventh embodiment are used to input a state transition matrix (a clone-state transition matrix) that describes the number of arrays of a plurality of state transition matrixes that are arrayed in this one state transition matrix. A hardware structure, a functional structure, and a program generation processing of the C language program generation apparatus relating to the seventh embodiment are similar to those of the C language program generation apparatus of the first embodiment, and therefore, their explanation will be omitted.

According to the state transition matrix in the seventh embodiment, a plurality of state transition matrixes are generated from one state transition matrix. This clone-state transition matrix is declared by describing a state transition matrix No. in the top left column of the state transition matrix shown in Fig. 2 or describing the number of arrays [n] in the name of this state transition matrix.

When the state transition matrix having a declaration of the number of arrays is input to the C language program generation apparatus, the code generator 101 generates programs by the number of the arrays like when state transition matrixes of the number of the arrays have been input.

As explained above, according to the C language program generation apparatus and the C language program generation program relating to the seventh embodiment, a clone-state transition matrix is used. Therefore, it is possible to manage a plurality of states with one state transition matrix. As a result, it is possible to generate an optimum program, when one protocol is used to manage communications with the other station that has a plurality of communication control protocol tasks or manage a plurality of channels. Further, it is possible to manage easily a plurality of states with one state transition matrix. It is also possible to reduce the quantity of program codes and reduce the quantity of memories used at the time of executing programs.

A C language program generation apparatus and a C language program generation program relating to an eighth embodiment are used to input a state transition matrix that describes a standard action (activity) executed when a specific event has occurred or when a state transits to a specific state. A hardware structure, a functional structure, and a program generation processing of the C language program generation apparatus relating to the eighth embodiment are similar to those of the C language program generation apparatus of the first embodiment, and therefore, their explanation will be omitted.

Activity includes an event activity executed according to the occurrence of an event, and a state activity executed following a transition of a state. Fig. 31 is an explanatory diagram of a state transition matrix having an assignment of an event activity input to the C language program generation apparatus relating to the eighth embodiment.

Event activity includes an event analysis start activity as a standard processing executed prior to the execution of an event analysis processing, and an event analysis end activity executed just before waiting for the next event, after an event analysis processing is started, and action and transition, if any, have been executed respectively. An event analysis start activity is described as S (within a circle) as shown in the column of the event in Fig. 31. An event analysis end activity is described as E (within a circle) as shown in the column of the event in Fig. 31.

As explained above, according to the C language program generation apparatus and the C language program generation program relating to the eighth embodiment, a state transition matrix having an assignment of event activities is used. As there is no description in the action cell, it is possible to collectively describe actions at one position, and it is possible to improve the maintenance of the state transition matrix. For example, in the case of LSI control, when a specific control signal is received (event occurrence), a specific command is issued to the LSI. With this arrangement, at the time of carrying out communications with this LSI, the command is registered in the event activity. When the LSI is changed to other LSI, only the event activity may be corrected. As a result, it is possible to carry out the maintenance easily.

Further, state activity includes a state start activity executed when a state has become active (when a state has transited to this state), a state end activity executed when a state has become not active (when a state transits to the next state), and a dispatch activity executed when a state driven state transition matrix changes over the monitoring of an event.

Fig. 32 is an explanatory diagram of a state transition matrix having an assignment of a state activity input to the C language program generation apparatus relating to the eighth embodiment. A state start activity is described as S (within a circle) as shown in the column of the state in Fig. 32. An event analysis end activity is described as E (within a circle) as shown in the column of the state Fig. 32. A dispatch activity is described as M (within a circle) as shown in the column of the state Fig. 32. The program generation processing when these activities have been assigned is similar to the processing by the code generator 101 of the first embodiment.

As explained above, according to the C language program generation apparatus and the C language program generation program relating to the eighth embodiment, a state transition matrix having an assignment of state activities is used. Therefore, it is possible to register a processing that depends on a specific state. For example, in the case of continuously sampling a current speed during a running in an auto-cruise control, a speed sampling mode activity may be registered in an auto-cruise run state.

A C language program generation apparatus and a C language program generation program relating to a ninth embodiment are used to input a state transition matrix that describes a standard action (activity) executed when a specific event has occurred or when a state transits to a specific state. A hardware structure, a functional structure, and a program generation processing of the C language program generation apparatus relating to the ninth embodiment are similar to those of the C language program generation apparatus of the first embodiment, and therefore, their explanation will be omitted.

According to the C language program generation apparatus and the C language program generation program relating to the ninth embodiment, there is used a state transition matrix that describes standard actions that are executed when a specific event has occurred or when a state transits to a specific state. Therefore, actions that are operated at each time of the occurrence of an event or each state transition can be collectively described at one position. As it is not necessary to describe actions in each cell, it is possible to improve the maintenance of the state transition matrix.

It is possible to register the state transition matrices used in the first to ninth embodiments, on the computer by classifying the state transition matrixes into task, driver, and handler. In this case, it is possible to automatically generate a TCB (task control block) or a DCB (driver control block) for a real-time OS, and an address of an interruption handler to an interruption vector table, from registered information.

The C language programs and the state transition matrixes explained in the first to ninth embodiments show one example respectively, and the present invention is not limited to these. While the present invention is applied to the apparatus that generates a C language program in the first to ninth embodiments, it is also possible to apply the invention to apparatuses that generate other programming languages.

As explained above, according to the first aspect of the invention, there is an effect that it is possible to reduce the quantity of program codes and the memory size to be used, without affecting the execution of the program.

Further, according to the second aspect of the invention, there is an effect that it is possible to reduce the quantity of program codes and reduce the memory capacity. Further, it is possible to improve the program execution speed.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A program generation program that makes a computer execute:
an input step of inputting an event driven state transition matrix, the event driven state transition matrix having a plurality of cells, each cell being specified by a state that a system for which a program is developed can take and by an event that is a stimulus from the outside or the inside of the system, and describing in each cell, action contents that the system should execute when an event occurs under a corresponding state or a state of a transition destination to which the state should be transited;
an action table generation step of generating an action table that describes action contents for each state, by extracting only cells that describe the action contents to be executed by the system from the state transition matrix;
a transition table generation step of generating a transition table that describes a state of the transition destination for each state, by extracting only cells that describe states of transition destinations from the state transition matrix;
an event table generation step of generating an event table that describes an event that exists in each state from the state transition matrix; and
an execution processing generation step of generating an execution processing program to be operated in the system, by confirming existence of an event under each state by referring to the event table when an event has occurred, and by executing action contents of a cell corresponding to an event that has occurred in the current state by referring to the action table and the transition table.

2. A program generation program that makes a computer execute:
an input step of inputting a state driven state transition matrix to be used to monitor the occurrence of an event in each state, the state transition matrix having a plurality of cells, each cell being specified by a state that a system for which a program is developed can take and by an event that is a stimulus from the outside or the inside of the system, and describing in each cell, action contents that the system should execute or a state of a transition destination to which the state should be transited;
a state activity information table generation step of generating a state activity information table that describes an event analysis processing or a standard processing for each state, from the state transition matrix;
a master state ID information table generation step of generating a master state ID information table that describes in a list identification information of a master state as a high-order state, from the state transition matrix;
a sub state ID information table generation step of generating a sub state ID information table that describes in a list identification information of a sub state as a lower state than the master state, from the state transition matrix; and
an execution processing generation step of generating an execution processing program to be operated in the system, by deciding whether each state is a master state or a sub state based on the master state ID information table and the sub state ID information table, and by executing an event analysis processing or a standard processing for each state based on a result of the decision and the state activity information table.

3. A method of generating a computer program comprising:
an input step of inputting an event driven state transition matrix, the event driven state transition matrix having a plurality of cells, each cell being specified by a state that a system for which a program is developed can take and by an event that is a stimulus from the outside or the inside of the system, and describing in each cell, action contents that the system should execute when an event occurs under a corresponding state or a state of a transition destination to which the state should be transited;
an action table generation step of generating an action table that describes action contents for each state, by extracting only cells that describe the action contents to be executed by the system from the state transition matrix;
a transition table generation step of generating a transition table that describes a state of the transition destination for each state, by extracting only cells that describe states of transition destinations from the state transition matrix;
an event table generation step of generating an event table that describes an event that exists in each state from the state transition matrix; and
an execution processing generation step of generating an execution processing program to be operated in the system, by confirming existence of an event under each state by referring to the event table when an event has occurred, and by executing action contents of a cell corresponding to an event that has occurred in the current state by referring to the action table and the transition table.

4. A method of generating a computer program comprising:
an input step of inputting a state driven state transition matrix to be used to monitor the occurrence of an event in each state, the state transition matrix having a plurality of cells, each cell being specified by a state that a system for which a program is developed can take and by an event that is a stimulus from the outside or the inside of the system, and describing in each cell, action contents that the system should execute or a state of a transition destination to which the state should be transited;
a state activity information table generation step of generating a state activity information table that describes an event analysis processing or a standard processing for each state, from the state transition matrix;
a master state ID information table generation step of generating a master state ID information table that describes in a list identification information of a master state as a high-order state, from the state transition matrix;
a sub state ID information table generation step of generating a sub state ID information table that describes in a list identification information of a sub state as a lower state than the master state, from the state transition matrix; and
an execution processing generation step of generating an execution processing program to be operated in the system, by deciding whether each state is a master state or a sub state based on the master state ID information table and the sub state ID information table, and by executing an event analysis processing or a standard processing for each state based on a result of the decision and the state activity information table.

5. A computer program comprising program code means for executing on a computer the method of claim 3 or 4.

6. A computer-readable storage medium encoding a computer program according to claim 5.

7. A computer system programmed to execute the method of claim 3 or 4.
